# EUROPEAN PATENT APPLICATION

(11) **EP 4 818 503 A1**
(43) Date of publication of application: **07.10.2026**
(21) Application number: 26161688.2
(22) Date of filing: 02.03.2026
(51) Int. Cl.: F02D 41/00, F01N 3/10, F01N 3/20, F02D 19/06, F02D 19/08, F02D 19/10, F02D 29/06, F02D 35/02, F02D 41/14, F02M 26/06, F02M 26/15

(54) **ENGINE SYSTEM**

(30) Priority: 31.03.2025 JP 2025057467
(71) Applicant: Yanmar Holdings Co., Ltd., Osaka (JP)
(72) Inventor: DOUI, Masayoshi, Osaka (JP); HONDA, Yusuke, Osaka (JP); SATO, Yoshiyuki, Osaka (JP)
(74) Representative: Isarpatent

(57) **Abstract**

[Problem] To avoid deterioration of an exhaust gas purification catalyst by suppressing influence of responsiveness of an apparatus.

[Solution] An engine system comprises: an engine including a first fuel supplying portion that supplies a first fuel to a combustion chamber and a second fuel supplying portion that supplies a second fuel to the combustion chamber; an exhaust gas purification catalyst that is disposed in an exhaust passage of the engine and purifies components derived from the second fuel; a bypass passage that is connected to the exhaust passage and bypasses the exhaust gas purification catalyst; a control valve that adjusts a passage ratio of an exhaust gas of the engine through the exhaust gas purification catalyst and through the bypass passage; and a controller that controls the control valve; wherein a first mode in which the first fuel supplying portion is operated and a second mode in which operation of the first fuel supplying portion is stopped and the second fuel supplying portion is operated are provided to be selectable, and the controller controls the control valve to increase a passage ratio of the exhaust gas through the bypass passage when selection of the first mode is detected during operation in the second mode.

## Description

### TECHNICAL FIELD

The present invention relates to an engine system.

### BACKGROUND ART

Conventionally, an engine using a gas fuel containing a methane constituent such as natural gas is known. In such an engine, it is known that a methane slip in which unburned methane is discharged into the atmosphere occurs, and a countermeasure against the methane slip is required from the viewpoint of greenhouse gas reduction.

As a countermeasure against the methane slip, it is known to use a methane oxidation catalyst (see, for example, Patent Documents 1 and 2). However, it is known that the methane oxidation catalyst causes deactivation of the catalyst derived from sulfur (sulfur poisoning), and when the methane oxidation catalyst is used, a countermeasure against the sulfur poisoning is required. Patent Document 2 discloses that, as a countermeasure against the sulfur poisoning, a gas stream containing methane is brought into contact with an SO2 absorbing agent before being brought into contact with a methane oxidation catalyst.

In addition, a technique for suppressing sulfur poisoning of an NOx catalyst is conventionally known (for example, see Patent Document 3). Patent Document 3 discloses that, when SOx concentration detection means detects SOx having a concentration higher than a predetermined value, an exhaust gas control valve is controlled so that exhaust gas passes through a bypass passage, and thereby, suppressing sulfur poisoning of a catalyst.

### PRIOR ART DOCUMENT

### PATENT DOCUMENT

Patent Document 1: Japanese Unexamined Patent Application Publication No. 2022-118346
Patent Document 2: Japanese Unexamined Patent Application Publication (Translation of PCT Application) No. 2018-510767
Patent Document 3: Japanese Unexamined Patent Application Publication No. 2006-266144

### SUMMARY OF INVENTION

### TECHNICAL PROBLEM

For example, when an engine is configured so that a liquid fuel containing a sulfur constituent such as heavy oil and a gas fuel containing a methane constituent such as natural gas can be switchably used, a problem of methane slip due to the use of the gas fuel occurs. It is conceivable to use a methane oxidation catalyst as a countermeasure against methane slip. However, in this case, there is a problem of sulfur poisoning of the methane oxidation catalyst due to the use of a liquid fuel containing a sulfur constituent.

With reference to the technique disclosed in Patent Document 3, it is considered that the SOx concentration in the exhaust gas (exhaust gas) is detected by the SOx concentration sensor, the exhaust gas having a high SOx concentration is allowed to pass through the bypass passage, and the exhaust gas having a low SOx concentration is allowed to pass through the methane oxidation catalyst. Thus, it is considered that both of the problem of methane slip and the problem of sulfur poisoning can be solved.

However, the size of a system including an engine and a catalyst tends to increase when the system is applied to, for example, a large vessel or the like. The responsiveness of equipment is reduced in a large-sized system. For this reason, in a configuration in which the SOx concentration is measured by a sensor and the passage through which the exhaust gas passes is switched in accordance with the measurement result, there is a concern that a delay in switching the passage may occur. For example, as a result of the delay in the switching of the passage, exhaust gas containing a large amount of sulfur constituent may pass through the methane oxidation catalyst, and the methane oxidation catalyst may deteriorate due to sulfur poisoning.

In view of the above, it is an object of the present invention to provide a technique that makes it possible to avoid deterioration of an exhaust gas purification catalyst by suppressing the influence of the responsiveness of a device.

### SOLUTION TO PROBLEM

An exemplary engine system of the present invention comprises: an engine including a first fuel supplying portion that supplies a first fuel to a combustion chamber and a second fuel supplying portion that supplies a second fuel to the combustion chamber; an exhaust gas purification catalyst that is disposed in an exhaust passage of the engine and purifies components derived from the second fuel; a bypass passage that is connected to the exhaust passage and bypasses the exhaust gas purification catalyst; a control valve that adjusts a passage ratio of an exhaust gas of the engine through the exhaust gas purification catalyst and through the bypass passage; an EGR device that is connected to the exhaust passage on an upstream side of the control valve and recirculates a part of the exhaust gas to a supply air passage of the engine; and a controller that controls the control valve and the EGR device. In the engine system, a first mode in which the first fuel supplying portion is operated and a second mode in which operation of the first fuel supplying portion is stopped and the second fuel supplying portion is operated are provided to be selectable, and the controller operates the EGR device when selection of the second mode is detected, and controls the control valve to increase a passage ratio of the exhaust gas through the bypass passage when selection of the first mode is detected during operation in the second mode.

### ADVANTAGEOUS EFFECTS OF INVENTION

According to the exemplary engine system of the present invention, it is possible to avoid deterioration of an exhaust gas purification catalyst by suppressing the influence of the responsiveness of the device.

### BRIEF DESCRIPTION OF DRAWINGS

FIG. 1 is a schematic diagram showing a schematic configuration of an engine system.
FIG. 2 is a diagram explaining an operation mode of an engine.
FIG. 3 is a diagram showing a use state of an exhaust gas purification catalyst for each operation mode in the engine system.
FIG. 4 is a diagram showing an overview of a control system included in the engine system.
FIG. 5 is a block diagram showing a control image in the engine system.
FIG. 6 is a flowchart showing a flow of operation control of a control valve included in the engine system.
FIG. 7 is a time chart showing a specific example of an operation when the operation mode is switched from the first mode to the second mode and from the second mode to the first mode.

### DESCRIPTION OF EMBODIMENTS

An exemplary embodiment of the present invention will be explained with reference to the drawings. Note that, in the drawings, the same or corresponding parts are denoted by the same reference numerals, and explanation thereof will not be repeated unless otherwise required.

### <1. Overview of Engine System>

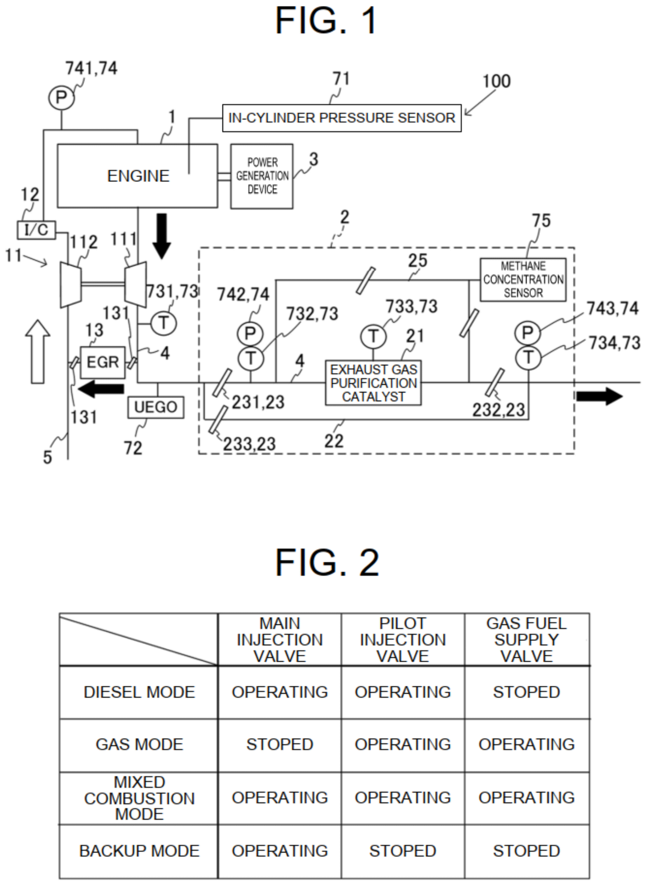

FIG. 1 is a schematic diagram showing a schematic configuration of an engine system 100 according to an embodiment of the present invention. As shown in FIG. 1, the engine system 100 includes an engine 1 and a catalyst system 2. The engine system 100 is, for example, an engine system for power generation used on land or on a ship. For this purpose, the engine system 100 further includes an electric power generator 3 that generates electric power by the output of the engine 1. However, the engine system of the present invention may be applied to other purposes, for example, ship propulsion. When the engine system is used for other purposes, the engine system does not necessarily include an electric power generator.

In FIG. 1, a white thick arrow indicates a direction in which supply air (supply gas) flows in the engine system 100, and a black thick arrow indicates a direction in which exhaust gas (exhaust gas) flows in the engine system 100.

### [1-1. Engine]

The engine 1 can use a first fuel and a second fuel that are different in type from each other. For this purpose, the engine 1 includes a first fuel supplying portion that supplies the first fuel to a combustion chamber (not shown) and a second fuel supplying portion that supplies the second fuel to the combustion chamber. Although the present embodiment includes a third fuel supplying portion that supplies the first fuel to the combustion chamber for a purpose different from that of the first fuel supplying portion, the third fuel supplying portion is not an essential configuration. Specific examples of the first fuel supplying portion, the second fuel supplying portion, and the third fuel supplying portion will be described below.

In the present embodiment, the first fuel is a liquid fuel containing a sulfur constituent. Specific examples of the liquid fuel include petroleum fuels such as heavy oil, light oil, and gasoline. The second fuel is a gas fuel containing a methane constituent. A specific example of the gas fuel is natural gas. The natural gas used as fuel is in particular liquefied so as to be provided in the form of LNG. Hereinafter, in the present specification, for convenience of description, the first fuel is referred to as a liquid fuel, and the second fuel is referred to as a gas fuel.

The first fuel supplying portion and the third fuel supplying portion directly supply the liquid fuel such as heavy oil to the combustion chamber. The first fuel supplying portion and the third fuel supplying portion are different from each other in the injection amount of the liquid fuel to the combustion chamber. Since the first fuel supplying portion is intended to operate the engine 1 with the liquid fuel, the first fuel supplying portion has an injection valve (injector) that injects a larger amount of the liquid fuel into the combustion chamber than the third fuel supplying portion. On the other hand, the third fuel supplying portion has an injection valve (micro pilot injector) that injects a small amount of the liquid fuel as an ignition fuel into the combustion chamber. Hereinafter, in the present specification, for convenience of description, the first fuel supplying portion is referred to as a main injection valve, and the third fuel supplying portion is referred to as a pilot injection valve.

The second fuel supplying portion supplies the gas fuel such as natural gas that is the second fuel to the combustion chamber. Specifically, the second fuel supplying portion supplies the gas fuel to the combustion chamber via a supply air port provided in the engine 1. The second fuel supplying portion includes a gas fuel supply valve (injector) that supplies the gas fuel to the supply air port. Hereinafter, for convenience of description, the second fuel supplying portion is referred to as a gas fuel supply valve.

Each of the main injection valve, the pilot injection valve, and the gas fuel supply valve is provided for each combustion chamber (cylinder). The number of main injection valves and the like included in the engine 1 is changed in accordance with the number of cylinders of the engine 1.

FIG. 2 is a diagram explaining an operation mode of the engine 1. As shown in FIG. 2, the engine 1 can switch between a plurality of operation modes. Specifically, the engine 1 is configured such that a diesel mode, a gas mode, a mixed combustion mode, and a backup mode can be selected as the operation mode.

The diesel mode is a mode in which the engine 1 is operated using the liquid fuel such as heavy oil. In the diesel mode, the main injection valve and the pilot injection valve are operated, and the operation of the gas fuel supply valve is stopped (not operated). The gas mode is a mode in which the engine 1 is operated using the gas fuel such as natural gas. In the gas mode, the gas fuel supply valve and the pilot injection valve are operated, and the operation of the main injection valve is stopped. In the gas mode, specifically a very small amount of liquid fuel is used in addition to the gas fuel for the operation of the pilot injection valve.

The mixed combustion mode is a mode in which the engine 1 is operated using the liquid fuel and the gas fuel. In the mixed combustion mode, the ratio of the liquid fuel to the gas fuel is higher than that in the gas mode. In the mixed combustion mode, the main injection valve, the pilot injection valve, and the gas fuel supply valve are operated. The backup mode is an operation mode used when the pilot injection valve fails. In the backup mode, the main injection valve is operated, and the operation of the pilot injection valve and the gas fuel supply valve is stopped.

As can be seen from the above, in the engine system 100, a first mode in which the main injection valve (first fuel supplying portion) is operated and a second mode in which the operation of the main injection valve is stopped and the gas fuel supply valve (second fuel supplying portion) is operated are provided so as to be selectable. In the present embodiment, as can be seen from FIG. 2, the first mode includes the diesel mode, the mixed combustion mode, and the backup mode. The second mode is the gas mode. Hereinafter, in this specification, the terms "first mode" and "second mode" may be used in this sense. In the engine system of the present invention, the mixed combustion mode and the backup mode are not essential configuration.

In the present embodiment, the engine 1 is provided with a turbocharger 11, an intercooler 12, and an EGR device 13 (see FIG. 1). That is, the engine system 100 includes the turbocharger 11, the intercooler 12, and the EGR device 13. The engine 1 (engine system 100) may not be provided with these auxiliary machines 11 to 13. In a case where the engine system 100 does not include the turbocharger 11, "supply air" may be read as "intake air".

The turbocharger 11 includes a turbine 111 and a compressor 112. The turbine 111 is rotated by utilizing the exhaust gas of the engine 1. The rotary power of the turbine 111 is transmitted to the compressor 112. The compressor 112 pressurizes and compresses supply air such as air supplied from outside of the engine 1. The pressurized and compressed supply air is supplied to the combustion chamber of the engine 1 via the intercooler 12. The intercooler 12 is supplied with cooling water by a cooling water pump (not shown), and cools the supply air by heat exchange between the cooling water supplied from the cooling water pump and the pressurized and compressed supply air.

The Exhaust Gas Recirculation (EGR) device 13 is connected to an exhaust passage 4 of the engine 1, and recirculates a part of exhaust gas of the engine 1 to a supply air passage 5 of the engine 1. The EGR device 13 is connected to the exhaust passage 4 on the downstream side of the exhaust gas of the turbine 111. The EGR device 13 is connected to the supply air passage 5 on the upstream side of the compressor 112. The EGR device 13 includes an EGR valve 131. Specifically, the EGR valve 131 is disposed on an inlet side of the EGR device 13 connected to the exhaust passage 4 and on an outlet side of the EGR device 13 connected to the supply air passage 5. The EGR device 13 is switched between an operating state and a non-operating state by opening and closing of the EGR valve 131. Details of the control of the opening and closing of the EGR valve 131 will be described later.

Note that, in the present embodiment, fluid passages (the exhaust passage 4, the supply air passage 5, and the like) through which supply air and exhaust air pass are formed using hollow members such as pipes.

### [1-2. Catalyst System]

The catalyst system 2 is a system that is provided for the purpose of purifying components derived from the gas fuel (second fuel) contained in the exhaust gas of the engine 1. As described above, the gas fuel contains a methane constituent, and the catalyst system 2 is a system provided as a countermeasure against methane slip. As shown in FIG. 1, the catalyst system 2 includes an exhaust gas purification catalyst 21, a bypass passage 22, and a control valve 23. That is, the engine system 100 includes the exhaust gas purification catalyst 21, the bypass passage 22, and the control valve 23.

The exhaust gas purification catalyst 21 is disposed in the exhaust passage 4 of the engine 1. That is, the exhaust gas of the engine 1 can pass through the exhaust gas purification catalyst 21. Specifically, the exhaust gas purification catalyst 21 purifies components derived from the gas fuel (second fuel). More specifically, the exhaust gas purification catalyst 21 is a methane oxidation catalyst. The exhaust gas purification catalyst 21 oxidizes the methane contained in the gas fuel. When the exhaust gas of the engine 1 passes through the exhaust gas purification catalyst 21 (methane oxidation catalyst), the amount of methane contained in the exhaust gas discharged to the outside of the engine system 100 can be reduced.

The bypass passage 22 is connected to the exhaust passage 4. Specifically, one end and the other end of the bypass passage 22 are connected to the exhaust passage 4. The bypass passage 22 is a passage that bypasses the exhaust gas purification catalyst 21. That is, since the bypass passage 22 is provided in the engine system 100, the exhaust gas of the engine 1 can be discharged to the outside of the engine system 100 without passing through the exhaust gas purification catalyst 21.

In the present embodiment, both of the exhaust gas inlet side and the exhaust gas outlet side of the bypass passage 22 are connected to the exhaust passage 4, but this is merely an example. The exhaust gas outlet side of the bypass passage 22 may not be connected to the exhaust passage 4. In this case, the engine system 100 has two discharge ports that discharge the exhaust gas to the outside of the engine system 100.

The control valve 23 adjusts a passage ratio of the exhaust gas of the engine 1 between the exhaust gas purification catalyst 21 and the bypass passage 22. The control valve 23 may be, for example, a valve capable of arbitrarily adjusting a flow rate by a command, but may be configured to switch only opening and closing of the valve by a command. In the present embodiment, the control valve 23 includes a plurality of control valves 231 to 233. The number of the control valves 23 may be appropriately changed in accordance with, for example, the type of the valve and the configuration of the bypass passage 22.

In the present embodiment, the control valve 23 includes a catalyst upstream valve 231, a catalyst downstream valve 232, and a bypass upstream valve 233. The catalyst upstream valve 231 is arranged in the exhaust passage 4 on the upstream side of the exhaust gas purification catalyst 21. The catalyst downstream valve 232 is arranged in the exhaust passage 4 on the downstream side of the exhaust gas purification catalyst 21. The bypass upstream valve 233 is disposed in an upstream portion of the bypass passage 22. The upstream portion of the bypass passage 22 is in the vicinity of the exhaust gas inlet portion of the bypass passage 22.

For example, it is assumed that the catalyst upstream valve 231 and the catalyst downstream valve 232 are opened (opening degree of 100%) and the bypass upstream valve 233 is closed (opening degree of 0%). In this case, the exhaust gas of the engine 1 passes through the exhaust gas purification catalyst 21 and is discharged to the outside of the engine system 100, and does not pass through the bypass passage 22. Further, for example, it is assumed that the catalyst upstream valve 231 and the catalyst downstream valve 232 are closed (opening degree of 0%) and the bypass upstream valve 233 is opened (opening degree of 100%). In this case, the exhaust gas of the engine 1 passes through the bypass passage 22 and is discharged to the outside of the engine system 100, and does not pass through the exhaust gas purification catalyst 21.

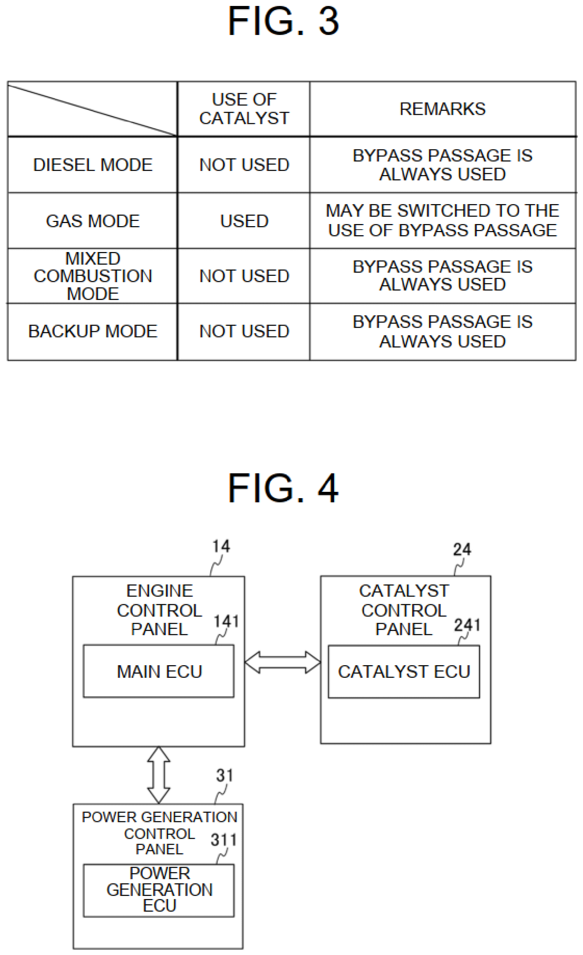

FIG. 3 is a diagram showing the use state of the exhaust gas purification catalyst 21 for each operation mode in the engine system 100. As shown in FIG. 3, the exhaust gas purification catalyst 21 is used in the gas mode. On the other hand, the exhaust gas purification catalyst 21 is not used in the diesel mode, the mixed combustion mode, and the backup mode.

Specifically, in principle, the opening degrees of the catalyst upstream valve 231 and the catalyst downstream valve 232 are set to 100% and the opening degree of the bypass upstream valve 233 is set to 0% in the gas mode so that the exhaust gas of the engine 1 passes through the exhaust gas purification catalyst 21. Thus, it is possible to suppress the discharge of unburned methane to the outside of the engine system 100 by the action of the exhaust gas purification catalyst (methane oxidation catalyst) 21. That is, it can be said that the engine system 100 is configured to have a countermeasure against methane slip.

On the other hand, unburned methane is basically not generated in the diesel mode, the mixed combustion mode, and the backup mode. In addition, since the liquid fuel containing a sulfur constituent is used in the diesel mode, the mixed combustion mode, and the backup mode, the amount of SOx contained in the exhaust gas cannot be ignored, and deterioration of the exhaust gas purification catalyst (methane oxidation catalyst) 21 due to sulfur poisoning becomes a problem. In consideration of such a point, the control valve 23 is controlled such that the exhaust gas of the engine 1 passes through the bypass passage 22 without passing through the exhaust gas purification catalyst 21 in the diesel mode, the mixed combustion mode, and the backup mode. Specifically, in the diesel mode, the mixed combustion mode, and the backup mode, the opening degrees of the catalyst upstream valve 231 and the catalyst downstream valve 232 are set to 0%, and the opening degree of the bypass upstream valve 233 is set to 100%.

As shown in remarks in FIG. 3, in this embodiment, the bypass passage 22 is always used in the diesel mode, the mixed combustion mode, and the backup mode, and the exhaust gas of the engine 1 does not pass through the exhaust gas purification catalyst 21 in these modes. On the other hand, in the gas mode, the bypass passage 22 is basically not used, but the bypass passage 22 may be switched to be used according to the use situation of the engine system 100. This respect is to be described below.

Further, in the present embodiment, each of the control valves 231 to 233 is configured to be controlled such that the opening degree thereof is either 0% or 100%, but this is not an essential configuration. For example, in the gas mode, a part (a small amount) of the exhaust gas of the engine 1 may pass through the bypass passage 22 at a level at which the discharge of methane is not a problem. Further, for example, in the diesel mode or the like, a part (a small amount) of the exhaust gas of the engine 1 may pass through the exhaust gas purification catalyst 21 at a level at which sulfur poisoning is not a problem.

### [1-3. Control System]

FIG. 4 is a diagram showing an overview of a control system included in the engine system 100. As shown in FIG. 4, the engine system 100 includes an engine control panel 14, a catalyst control panel 24, and a power generation control panel 31.

The engine control panel 14 is a control panel provided mainly for controlling the engine 1. The engine control panel 14 enables a user to operate settings related to the engine 1. In addition, the engine control panel 14 includes a main electronic control unit (ECU) 141 that manages the entire engine system 100 including management related to the engine 1. The main ECU141 includes, for example, a controller having an arithmetic device, an input/output portion, and a storage portion.

The arithmetic device is composed of, for example, a processor or a microprocessor. The storage portion is a main storage device such as a read only memory (ROM) and a random access memory (RAM). The storage portion may further include an auxiliary storage device such as a hard disk drive (HDD) or a solid state drive (SSD). Various programs and data are stored in the storage portion. The arithmetic device exerts various functions by reading various programs from the storage portion and executing arithmetic processing in accordance with the programs. The program stored in the storage portion may be provided by, for example, a computer-readable non-volatile recording medium. As another example, the program may be provided from a program providing server via a communication line such as the Internet.

The catalyst control panel 24 is a control panel for controlling the catalyst system 2. The catalyst control panel 24 enables a user to operate settings related to the catalyst system 2. The catalyst control panel 24 includes a catalytic ECU 241 for managing the catalyst system 2. The catalytic ECU241 includes, for example, a controller having an arithmetic device, an input/output portion, and a storage portion. Since the schematic configuration of the arithmetic device and the like is the same as that of the main ECU 141, the description thereof is omitted here.

The power generation control panel 31 is a control panel for controlling the electric power generator 3. The power generation control panel 31 enables a user to operate settings related to the electric power generator 3. Further, the power generation control panel 31 includes a power generation ECU 311 for managing the electric power generator 3. The power generation ECU 311 includes, for example, a controller having an arithmetic device, an input/output portion, and a storage portion. Since the schematic configuration of the arithmetic device and the like is the same as that of the main ECU 141, the description thereof is omitted here.

The main ECU 141 and the catalytic ECU 241 can communicate with each other by using a communication network. Further, the main ECU 141 and the power generation ECU 311 can communicate with each other using a communication network. A specific example of the communication network is a Local Area Network (LAN). The LAN applied to the engine system 100 may be a wired LAN or a wireless LAN. The main ECU 141 issues a command to the catalytic ECU 241 and receives information from the catalytic ECU 241. The main ECU 141 issues a command to the power generation ECU 311 and receives information from the power generation ECU 311.

For example, in the present embodiment, the catalytic ECU 241 controls the control valve 23 and the like included in the catalyst system 2. However, the catalytic ECU 241 does not control the control valve 23 and the like by its own decision, but controls the control valve 23 and the like according to a command from the main ECU 141. When an abnormality occurs in the catalyst system 2, information on the abnormality is transmitted from the catalytic ECU 241 to the main ECU 141. The main ECU 141 appropriately performs processing according to the received abnormality information.

In the present embodiment, the engine control panel 14 and the catalyst control panel 24 are provided separately, but this is merely an example. The engine control panel 14 and the catalyst control panel 24 may be integrated into one control panel. Similarly, the engine control panel 14 and the power generation control panel 31 may be integrated into one control panel. Further, the engine control panel 14, the catalyst control panel 24, and the power generation control panel 31 may be integrated into one control panel. Further, as described above, in the engine system of the present invention, the electric power generator 3 is not essential, and the power generation control panel 31 is not necessary when the engine system 100 does not include the electric power generator 3.

### <2. Control Operation of Engine System>

Next, a control operation executed by the engine system 100 will be described.

### [2-1. Overview]

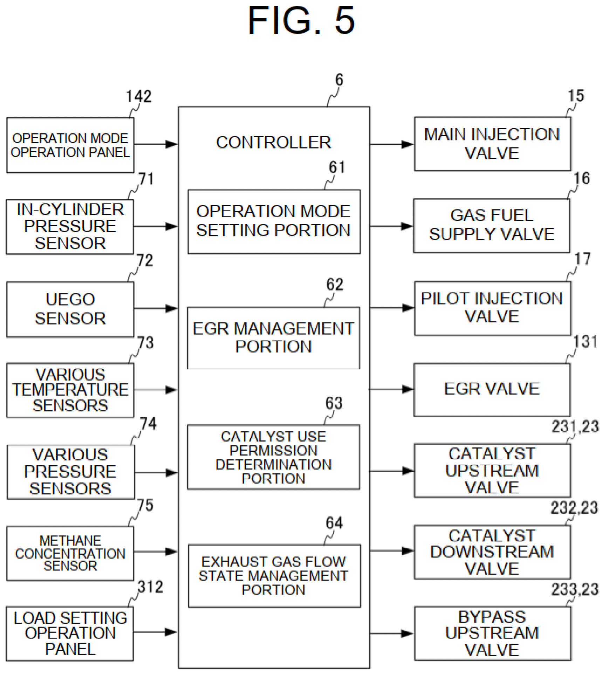

FIG. 5 is a block diagram showing a control image in the engine system 100. Note that FIG. 5 is a diagram mainly showing elements related to the control operation of the present invention, and illustration of general elements is omitted.

As shown in FIG. 5, the engine system 100 includes a controller 6. Here, the controller 6 is assumed to be the controller of the main ECU 141. However, as described above, in the present embodiment, the control related to the catalyst system 2 is performed by the main ECU 141 and the catalytic ECU 241 in cooperation with each other. For this reason, the controller 6 may be appreciated as being composed of the controller of the main ECU 141 and the controller of the catalytic ECU 241.

As shown in FIG. 5, the controller 6 appropriately controls various elements included in the engine system 100 when information from sensors and the like is received. As a specific example, the controller 6 controls a main injection valve 15, a gas fuel supply valve 16, and a pilot injection valve 17 included in the engine 1. Since the description of the main injection valve 15, the gas fuel supply valve 16, and the pilot injection valve 17 is the same as the above description, the description thereof is omitted here. Further, the controller 6 controls the EGR valve 131 included in the EGR device 13. Since the description of the EGR valve 131 is the same as the above description, the description thereof is omitted here.

Further, the controller 6 controls the control valve 23 included in the catalyst system 2. Specifically, the controller 6 controls the control valve 23 in cooperation with the controller of the catalytic ECU 241. As described above, the control valve 23 includes the catalyst upstream valve 231, the catalyst downstream valve 232, and the bypass upstream valve 233. Since the description of these components is the same as the above description, the description thereof is omitted here.

As shown in FIG. 5, the controller 6 receives information from an operation mode operation panel 142, an in-cylinder pressure sensor 71, a Universal Exhaust Gas Oxygen (UEGO) sensor 72, various temperature sensors 73, various pressure sensors 74, a methane concentration sensor 75, and a load setting operation panel 312. These will be briefly described below.

The operation mode operation panel 142 is provided on the engine control panel 14. The user can operate the operation mode operation panel 142 to switch the operation mode. The controller 6 can acquire information of the operation mode set by the user from the operation mode operation panel 142.

The in-cylinder pressure sensor 71 is a pressure sensor provided for each combustion chamber of the engine 1. The controller 6 can calculate the misfire rate of each cylinder based on the combustion pressure obtained from the in-cylinder pressure sensor 71.

The Universal Exhaust Gas Oxygen (UEGO) sensor 72 is provided in the exhaust passage 4 and can detect the concentration of oxygen contained in the exhaust gas of the engine 1. That is, the engine system 100 includes an oxygen concentration sensor. The controller 6 can acquire the air-fuel ratio in the engine 1 from the detection value of the UEGO sensor 72.

The various temperature sensors 73 refer to various temperature sensors included in the engine system 100. In the present embodiment, the various temperature sensors 73 include a turbocharger outlet temperature sensor 731, a pre-catalyst temperature sensor 732, a catalyst temperature sensor 733, and a post-catalyst temperature sensor 734. The turbocharger outlet temperature sensor 731 measures the temperature of the exhaust gas near the outlet of the turbocharger 11 (turbine 111). The pre-catalyst temperature sensor 732 measures the temperature of the exhaust gas between the catalyst upstream valve 231 and the exhaust gas purification catalyst 21. The catalyst temperature sensor 733 measures the temperature of the exhaust gas purification catalyst 21. The post-catalyst temperature sensor 734 measures the temperature of the exhaust gas between the exhaust gas purification catalyst 21 and the catalyst downstream valve 232. The controller 6 can acquire the temperature measured by each of the temperature sensors 731 to 734.

The various pressure sensors 74 refer to various pressure sensors included in the engine system 100. In the present embodiment, the various pressure sensors 74 include a supply air pressure sensor 741, a pre-catalyst pressure sensor 742, and a post-catalyst pressure sensor 743. The supply air pressure sensor 741 is provided on the downstream side of the compressor 112 in the supply air passage 5, and measures the pressure of the supply air. The pre-catalyst pressure sensor 742 measures the pressure of the exhaust gas between the catalyst upstream valve 231 and the exhaust gas purification catalyst 21. The post-catalyst pressure sensor 743 measures the pressure of the exhaust gas between the exhaust gas purification catalyst 21 and the catalyst downstream valve 232. The controller 6 can acquire the pressure measured by each of the pressure sensors 741 to 743.

The measurement value of the supply air pressure sensor 741 can be used to calculate the air-fuel ratio in the engine 1. That is, from the viewpoint of acquiring the air-fuel ratio, the engine system 100 may include at least one of the supply air pressure device (supply air pressure sensor 741) provided in the supply air passage 5 and the oxygen concentration detecting device (UEGO sensor 72) provided in the exhaust passage 4.

The methane concentration sensor 75 is provided in the passage 25 (see FIG. 1) connected to the exhaust passage 4 on the upstream side and the downstream side of the exhaust gas purification catalyst 21, and measures the methane concentration in the exhaust gas. The controller 6 can acquire the measured value of the methane concentration sensor 75.

The load setting operation panel 312 is provided on the power generation control panel 31. The user can operate the load setting operation panel 312 to set the load factor of the electric power generator 3. The controller 6 can acquire the load factor of the electric power generator 3 set by the user from the load setting operation panel 312.

As shown in FIG. 5, the controller 6 functions as an operation mode setting portion 61, an EGR management portion 62, a catalyst use permission determination portion 63, and an exhaust gas flow state management portion 64 by cooperation of hardware and software. The functions of the functional portions 61 to 64 are implemented by causing an arithmetic device (processor) to execute arithmetic processing in accordance with a program.

The function of at least any one of the functional portions 61 to 64 may be implemented by using Application Specific Integrated Circuit (ASIC), Field Programmable Gate Array (FPGA) or the like, for example. That is, the function of at least any one of the functional portions 61 to 64 may be implemented by hardware using a dedicated IC or the like. In addition, the function of at least any one of the functional portions 61 to 64 may be implemented by using both of software and hardware. In addition, each of the functional portions 61 to 64 is a conceptual component. The function implemented by one component may be distributed to a plurality of components. In addition, the functions of a plurality of components may be integrated into one component.

The operation mode setting portion 61 sets the operation mode of the engine 1 in accordance with an instruction from the operation mode operation panel 142. The operation mode setting portion 61 appropriately sets the operations of the main injection valve 15, the gas fuel supply valve 16, and the pilot injection valve 17 so that the engine 1 operates in the instructed operation mode. In addition, the operation mode setting portion 61 appropriately performs setting related to fuel supply so that the engine 1 operates in the instructed operation mode. When the setting of the operation mode by the operation mode setting portion 61 is completed, the engine 1 starts the operation in the operation mode for which the setting is completed.

When selection of another operation mode is detected while the engine 1 is operating in a certain operation mode, the operation mode setting portion 61 performs a process necessary for changing the setting from the certain operation mode to another operation mode. For example, when a change to the gas mode by an instruction from the operation mode operation panel 142 is detected while the engine 1 is operating in the diesel mode, the operation mode setting portion 61 performs processing for changing the setting from the diesel mode to the gas mode. At this time, the operation mode setting portion 61 appropriately performs operation setting and adjustment of the supply amount of fuel of the main injection valve 15, the gas fuel supply valve 16, and the pilot injection valve 17.

The EGR management portion 62 manages the operation of the EGR device 13 connected to the exhaust passage 4 on the upstream side of the control valve 23. That is, the controller 6 controls the EGR device 13. In the present embodiment, when the selection of the second mode (gas mode) is detected, the EGR management portion 62 (controller 6) operates the EGR device 13. Here, "operates the EGR device 13" means opening the EGR valve at a predetermined opening degree. Further, "operates the EGR device 13" also includes changing the opening degree in accordance with the operating state of the engine. The selection of the second mode can be detected by information from the operation mode operation panel 142.

When the second mode is selected and the EGR device 13 is operated, the methane constituent contained in the exhaust gas of the engine 1 can be taken into the combustion chamber of the engine 1 again and combusted. For this reason, it is possible to reduce the amount of the methane constituent passing through the exhaust gas purification catalyst (methane oxidation catalyst) 21 arranged in the exhaust passage 4. As a result, an increase in the size of the methane oxidation catalyst can be suppressed, and an increase in the size of the control valve 23 can also be suppressed. By suppressing an increase in the size of the control valve 23, the responsiveness of the control valve 23 can be improved.

In the present embodiment, the EGR management portion 62 does not operate the EGR device 13 when the selection of the first mode (diesel mode, mixed combustion mode, or backup mode) is detected. Here, "not operate the EGR device 13" means closing the EGR valve. However, this is an example, and the EGR device 13 may be configured to be operated when any of the operation modes is selected.

The catalyst use permission determination portion 63 makes a determination related to the use permission requirement of the exhaust gas purification catalyst 21. As shown in FIG. 3 described above, the exhaust gas purification catalyst 21 is used only when the second mode (gas mode) is selected, and is not used when the first mode (diesel mode, mixed combustion mode, or backup mode) is selected. Therefore, when the second mode is selected, the catalyst use permission determination portion 63 makes a determination related to the use permission requirement of the exhaust gas purification catalyst 21. When the first mode is selected, the catalyst use permission determination portion 63 does not make a determination related to the use permission requirement of the exhaust gas purification catalyst 21.

There are a case in which the catalyst use permission determination portion 63 permits the use of the exhaust gas purification catalyst 21 and a case in which the catalyst use permission determination portion 63 does not permit the use of the exhaust gas purification catalyst 21. When the catalyst use permission determination portion 63 permits the use of the exhaust gas purification catalyst 21, the exhaust gas of the engine 1 passes through the exhaust gas purification catalyst 21. When the catalyst use permission determination portion 63 does not permit the use of the exhaust gas purification catalyst 21, the exhaust gas of the engine 1 passes through the bypass passage 22 so that the exhaust gas of the engine 1 does not pass through the exhaust gas purification catalyst 21.

The use permission requirement of the exhaust gas purification catalyst 21 is set in advance for the purpose of, for example, preventing deterioration of the exhaust gas purification catalyst 21. The types and the number of use permission requirements are determined by performing experiments, simulations, and the like in advance. The use permission requirements include, for example, requirements related to the engine 1 and requirements related to the catalyst system 2.

Specific examples of the use permission requirement of the exhaust gas purification catalyst 21 include the following requirements. For example, when all of these requirements are satisfied, the use of the exhaust gas purification catalyst 21 is permitted.
(Use permission requirements) predetermined time has passed after the transition from the first mode to the second mode is completed, the load factor of the engine 1 is equal to or more than a predetermined value, the misfire rate of each cylinder is equal to or less than a predetermined value, the air-fuel ratio is equal to or less than a predetermined value, the load variation rate is equal to or less than a predetermined value, the EGR device 13 is operating, the turbocharger outlet temperature of the exhaust gas is within a predetermined range, the methane concentration in the exhaust gas is equal to or less than a predetermined value, the catalyst temperature is within a predetermined range, and the components of the catalyst system 2 are normal.

The exhaust gas flow state management portion 64 manages the flow state of the exhaust gas of the engine 1. Specifically, the exhaust gas flow state management portion 64 determines the passage ratio of the exhaust gas of the engine 1 through the exhaust gas purification catalyst 21 and the bypass passage 22. After determining the passage ratio, the exhaust gas flow state management portion 64 gives an instruction to the catalytic ECU 241 so as to achieve the determined passage ratio. In response to the instruction, the catalytic ECU 241 controls the control valve 23. From this point, it can be said that the exhaust gas flow state management portion 64 (controller 6) controls the control valve 23.

The exhaust gas flow state management portion 64 determines the passage ratio of the exhaust gas of the engine 1 through the exhaust gas purification catalyst 21 and the bypass passage 22 based on the operation mode. Specifically, the exhaust gas flow state management portion 64 changes the passage ratio of the exhaust gas of the engine 1 through the exhaust gas purification catalyst 21 and the bypass passage 22 between the first mode (diesel mode or the like) and the second mode (gas mode).

As described above, even when the second mode is selected, the exhaust gas is not allowed to pass through the exhaust gas purification catalyst 21 unless the use permission requirement of the exhaust gas purification catalyst 21 is satisfied. For this reason, when the second mode is selected, the exhaust gas flow state management portion 64 determines the passage ratio based on the determination result of the use permission requirement of the exhaust gas purification catalyst 21 in the catalyst use permission determination portion 63.

Further, in the present embodiment, the determination of the passage ratio is selection of whether the passage ratio through the exhaust gas purification catalyst 21 is set to 100% (the passage ratio through the bypass passage 22 is 0%) or the passage ratio through the bypass passage 22 is set to 100% (the passage ratio through the exhaust gas purification catalyst 21 is 0%).

When the selection of the first mode is detected during the operation in the second mode, the exhaust gas flow state management portion 64 controls the control valve 23 to increase the passage ratio of the exhaust gas through the bypass passage 22. In other words, when the selection of the first mode is detected during the operation in the second mode, the exhaust gas flow state management portion 64 controls the control valve 23 to decrease the passage ratio through the exhaust gas purification catalyst 21. In the present embodiment, the passage ratio through the exhaust gas purification catalyst 21 is 0%, and the passage ratio through the bypass passage 22 is 100%.

With such a configuration, the passage ratio of the exhaust gas through the exhaust gas purification catalyst 21 can be reduced in accordance with the switching instruction from the second mode (gas mode) to the first mode (diesel mode or the like). According to this, the operation of the control valve 23 for suppressing the influence of the catalyst poison can be started earlier than in a configuration in which the concentration of the catalyst poison (sulfur constituent in the present embodiment) in the exhaust gas is detected before the exhaust gas purification catalyst 21 and the passage ratio of the exhaust gas through the exhaust gas purification catalyst 21 is reduced in accordance with the detection result. As a result, for example, even in a case where the engine system 100 is large, it is possible to avoid catalyst poisoning (deterioration of the catalyst) due to a catalyst poison constituent (sulfur constituent in the present embodiment) derived from the first fuel (heavy oil or the like) used in the first mode by suppressing the influence of the responsiveness of the device.

In addition, in a case in which the selection of the second mode is detected during the operation in the first mode, the exhaust gas flow state management portion 64 controls the control valve 23 to reduce the passage ratio of the exhaust gas through the bypass passage 22 when a predetermined period of time has passed after the detection of the selection of the second mode. In other words, when the selection of the second mode is detected during the operation in the first mode, the exhaust gas flow state management portion 64 controls the control valve 23 to increase the passage ratio of the exhaust gas through the exhaust gas purification catalyst 21 when a predetermined period of time has passed after the detection of the selection of the second mode. In the present embodiment, the passage ratio through the exhaust gas purification catalyst 21 is 100%, and the passage ratio through the bypass passage 22 is 0%.

In a case in which the exhaust gas is caused to immediately pass through the exhaust gas purification catalyst 21 by the instruction to switch from the first mode to the second mode, when the operation of the main injection valve 15 is not immediately stopped, a catalyst poison constituent (sulfur constituent in the present embodiment) derived from the first fuel (heavy oil or the like) may pass through the exhaust gas purification catalyst 21. On the other hand, when the operation of the main injection valve 15 is immediately stopped in response to the instruction to switch from the first mode to the second mode, the combustion state may become unstable. Then, when the combustion state becomes unstable, for example, there is a concern that an unfavorable situation may occur, such as a case in which the unburned constituent (methane) of the gas fuel used in the second mode becomes too much and adversely affects the exhaust gas purification catalyst 21. In this regard, in the present configuration, a predetermined grace period is provided after the instruction to switch from the first mode to the second mode, and the exhaust gas passes through the exhaust gas purification catalyst 21 after the grace period elapses. With such a configuration, it is possible to switch the operation from the main injection valve 15 to the gas fuel supply valve 16 without immediately stopping the operation of the main injection valve 15 by using the grace period. Therefore, it is possible to avoid the occurrence of the unfavorable situation as described above.

### [2-2. Operation Control of Control Valve]

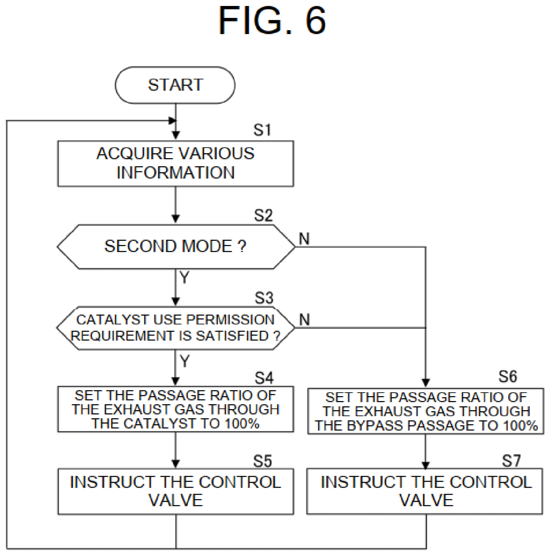

FIG. 6 is a flowchart showing a flow of operation control of the control valve 23 included in the engine system 100. The operation control process shown in FIG. 6 is started when the engine system 100 is activated.

In step S1, the controller 6 (information obtaining section or the like (not shown)) obtains various kinds of information. The various kinds of information include setting information of the operation mode using the operation mode operation panel 142 and information (permission requirement determination information) necessary for determining whether or not the use permission requirement of the exhaust gas purification catalyst 21 is satisfied. The permission requirement determination information includes, for example, information on the engine 1 (load factor information, misfire rate information of each cylinder, air-fuel ratio information, etc), operation information on the EGR device 13, information on the exhaust gas (temperature, methane concentration information, etc), and information on the catalyst system 2 (catalyst temperature, pressure difference information before and after the catalyst, information on the control valve 23, etc). When various kinds of information are acquired, the process proceeds to the next step S2.

In step S2, the controller 6 (catalyst use permission determination portion 63) uses the information acquired in step S1 to determine whether or not the operation mode is the second mode (gas mode). When the operation mode is the second mode (Yes in step S2), the process proceeds to the next step S3. On the other hand, when the operation mode is the first mode (diesel mode or the like) (No in step S2), the process proceeds to step S6.

In step S3, the controller 6 (catalyst use permission determination portion 63) determines whether or not the use permission requirement of the exhaust gas purification catalyst 21 is satisfied. The use requirement is as described above. When it is determined that the use permission requirement is satisfied (Yes in step S3), the process proceeds to the next step S4. When it is determined that the use permission requirement is not satisfied (No in step S3), the process proceeds to step S6.

In step S4, the controller 6 (exhaust gas flow state management portion 64) sets (determines) the passage ratio of the exhaust gas of the engine 1 through the exhaust gas purification catalyst 21 to 100% and the passage ratio of the exhaust gas of the engine 1 through the bypass passage to 0%. When the setting is completed, the process proceeds to the next step S5.

In step S5, the controller 6 (exhaust gas flow state management portion 64) gives an instruction to the control valve 23 so as to achieve the passage ratio set in step S4. In this embodiment, the controller 6 gives an instruction to the control valve 23 via the catalytic ECU 241. In accordance with the instruction, the control valve 23 is operated, and the exhaust gas of the engine 1 passes through the exhaust gas purification catalyst 21 and does not pass through the bypass passage 22. Specifically, the catalyst upstream valve 231 and the catalyst downstream valve 232 have an opening degree of 100%, and the bypass upstream valve 233 has an opening degree of 0%. When the process in step S5 is completed, the process returns to step S1, and the process from step S1 is repeated.

In step S6, the controller 6 (exhaust gas flow state management portion 64) sets (determines) the passage ratio of the exhaust gas of the engine 1 through the exhaust gas purification catalyst 21 to 0% and the passage ratio of the exhaust gas of the engine 1 through the bypass passage to 100%. When the setting is completed, the process proceeds to the next step S7.

In step S7, the controller 6 (exhaust gas flow state management portion 64) gives an instruction to the control valve 23 so as to achieve the passage ratio set in step S6. In this embodiment, the controller 6 gives an instruction to the control valve 23 via the catalytic ECU 241. In accordance with the instruction, the control valve 23 is operated, and the exhaust gas of the engine 1 does not pass through the exhaust gas purification catalyst 21 and passes through the bypass passage 22. Specifically, the catalyst upstream valve 231 and the catalyst downstream valve 232 have an opening degree of 0%, and the bypass upstream valve 233 has an opening degree of 100%. When the process in step S7 is completed, the process returns to step S1, and the process from step S1 is repeated.

As can be seen from the above description, when the use permission requirement of the exhaust gas purification catalyst 21 is not satisfied while the engine system 100 is operating in the second mode (gas mode), the exhaust gas of the engine 1 may not pass through the exhaust gas purification catalyst 21 and may pass through the bypass passage 22. Even in a case in which the exhaust gas passes through the bypass passage 22 while the operation in the second mode is maintained, the operation is ruturned to the state in which the exhaust gas passes through the exhaust gas purification catalyst 21 when the use permission requirement of the exhaust gas purification catalyst 21 is satisfied.

As a specific example, when it is detected that a setting of a load factor of the electric power generator 3 has been changed by a predetermined value or more during the operation in the second mode, the controller 6 may control the control valve 23 to increase the passage ratio of the exhaust gas through the bypass passage 22. Here, the change of the load factor of the electric power generator 3 by a predetermined value or more specifically means that a difference (absolute value) between a first load factor that is a current load factor set by the load setting operation panel 312 (see FIG. 5) and a second load factor that is a load factor set immediately before becomes a predetermined value or more.

When the change in the load factor is large, the operation of the engine 1 tends to be temporarily unstable. For example, when the load factor suddenly drops, a large amount of unburned constituent of the gas fuel may be generated in excess of the amount allowed for the exhaust gas purification catalyst 21. Further, for example, when the load factor suddenly increases, the injection amount of the liquid fuel (heavy oil or the like) of the pilot injection valve 17 temporarily increases, and the SOx concentration in the exhaust gas may increase to such an extent that sulfur poisoning of the exhaust gas purification catalyst 21 cannot be ignored. In this regard, in the above-described configuration, when the change in the load factor is large, it is possible to prevent the exhaust gas from passing through the exhaust gas purification catalyst 21 even in the second mode. Therefore, it is possible to suppress the deterioration of the exhaust gas purification catalyst 21.

Further, when it is detected that the load factor of the engine 1 is equal to or less than a predetermined load factor during the operation in the second mode, the controller 6 may control the control valve 23 to increase the passage ratio of the exhaust gas through the bypass passage 22. For example, the load factor of the engine 1 may be a value calculated according to the setting information of the electric power generator 3. Further, the load factor of the engine 1 may be obtained from torque information of the output shaft of the engine 1 or the like.

When the load factor of the engine 1 is too low, there is a possibility that the excess air ratio in the combustion chamber becomes too large and exceeds the combustible range of the gas fuel. Then, when such a state occurs, the fuel containing the sulfur constituent injected from the pilot injection valve 17 is contained in the exhaust gas in an unburned state, and sulfur poisoning of the exhaust gas purification catalyst 21 may occur. In this regard, in the above-described configuration, when the load factor of the engine 1 is equal to or less than the predetermined load factor, it is possible to prevent the exhaust gas from passing through the exhaust gas purification catalyst 21 even in the second mode. Therefore, it is possible to suppress the deterioration of the exhaust gas purification catalyst 21. In particular, in the configuration in which the load factor of the engine 1 is acquired in accordance with the setting information of the electric power generator 3, it is possible to quickly predict the possibility of occurrence of sulfur poisoning from the setting information of the electric power generator 3 and switch the control valve 23. For this reason, it is possible to avoid sulfur poisoning of the exhaust gas purification catalyst 21 by suppressing influence of responsiveness of the apparatus.

Further, the controller 6 may be configured to control the control valve 23 by using a detection value of at least one of the supply air pressure detecting device (supply air pressure sensor 741) and the oxygen concentration detecting device (UEGO sensor 72). With such a configuration, it is possible to estimate that the air-fuel ratio is high from the detection value and to control the control valve 23 to increase the passage ratio of the exhaust gas through the bypass passage 22 even in the second mode. When the air-fuel ratio becomes too high in the combustion chamber, as explained above, sulfur poisoning of the exhaust gas purification catalyst 21 is concerned. In this regard, according to the present configuration, since the control valve 23 can be switched to prevent the exhaust gas from passing through the exhaust gas purification catalyst 21 at the time when it is estimated that the air-fuel ratio is high from the detection value of the supply air pressure detecting device or the like, the sulfur poisoning of the exhaust gas purification catalyst 21 can be suppressed.

When the exhaust gas purification catalyst 21 is not used even in the second mode, it is preferable to notify the user of the fact. As a result, the user can recognize that the exhaust gas purification catalyst 21 cannot be used although the exhaust gas purification catalyst 21 should be used, and the user can take appropriate measures. Further, when the exhaust gas purification catalyst 21 has not been used for a predetermined period or more even in the second mode, the operation mode may be automatically shifted from the second mode to the first mode.

### [2-3. Specific Example of Operation of Engine System]

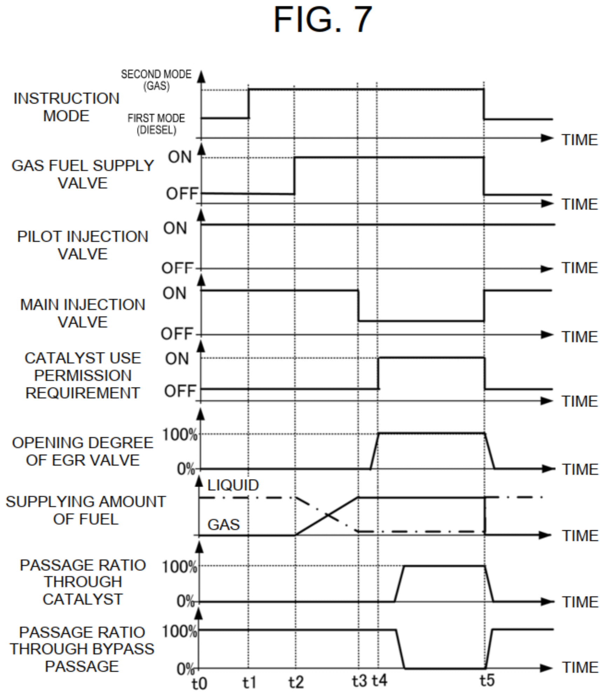

FIG. 7 is a time chart showing a specific example of an operation when the operation mode is switched from the first mode to the second mode and from the second mode to the first mode. In the example shown in FIG. 7, the first mode is the diesel mode, but substantially the same operation is performed when the first mode is the mixed combustion mode or the backup mode.

In the example shown in FIG. 7, at time t0, the engine system 100 is in the diesel mode. In this case, the gas fuel supply valve 16 is in an operation stop state (OFF), and the main injection valve 15 and the pilot injection valve 17 are in an operating state (ON). Since the pilot injection valve 17 is used in both of the diesel mode and the gas mode, the pilot injection valve 17 is always ON in the example shown in FIG. 7. The catalyst use permission requirement is not satisfied (OFF) since the operation mode is not the gas mode. Since the EGR device 13 is not used in the diesel mode, the opening degree of the EGR valve 131 is 0%. The liquid fuel such as heavy oil is used, and gas fuel is not used. In order to avoid sulfur poisoning of the exhaust gas purification catalyst 21, the passage ratio of the exhaust gas of the engine 1 through the catalyst is 0%, and the passage ratio through the bypass passage is 100%.

At time t1, the operation mode (instructed mode) instructed by the user is changed from the diesel mode to the gas mode, and the controller 6 detects the selection of the gas mode. When the selection of the gas mode is detected, the controller 6 starts preparation for shifting to the gas mode.

At time t2, the controller 6 completes confirmation that the equipment related to the supply of the gas fuel is normal, and operates (turns ON) the gas fuel supply valve 16. At this point in time, the controller 6 maintains the main injection valve 15 in the ON state. However, the controller 6 starts to gradually increase the supply amount of the gas fuel (second fuel), and starts to gradually decrease the supply amount of the liquid fuel (first fuel).

At time t3, the controller 6 detects that the supply amounts of the gas fuel and the liquid fuel that have been gradually changed have reached the target values, and stops the operation of the main injection valve 15 (turns off the main injector 15). Thus, the shift from the diesel mode (first mode) to the gas mode (second mode) is completed. That is, when the selection of the second mode during the operation in the first mode is detected, the controller 6 starts the second mode after executing the transition mode in which the supply amount of the second fuel by the second fuel supplying portion is increased while the supply amount of the first fuel by the first fuel supplying portion is reduced.

As shown in FIG. 7, during the execution of the transition mode, the controller 6 controls the control valve 23 to prohibit the exhaust gas of the engine 1 from passing through the exhaust gas purification catalyst 21. During the execution of the transition mode, a relatively large amount of sulfur constituent derived from the liquid fuel is contained in the exhaust gas of the engine 1. In this regard, in the present embodiment, since the passage of the exhaust gas through the exhaust gas purification catalyst 21 is prohibited during the execution of the transition mode, the sulfur poisoning of the exhaust gas purification catalyst 21 can be avoided.

Further, as shown in FIG. 7, the controller 6 increases the opening degree of the EGR valve 131 after the completion of the transition mode. That is, the use of the EGR device 13 is started after the completion of the transition mode.

At time t4, the controller 6 detects the operation of the EGR device 13, and detects that the other catalyst use permission requirement is also satisfied (the catalyst use permission requirement is turned ON). Accordingly, with respect to the flow state of the exhaust gas of the engine 1, the controller 6 determines that the passage ratio of the exhaust gas through the exhaust gas purification catalyst 21 is 100% and the passage ratio of the exhaust gas through the bypass passage 22 is 0%. Then, the controller 6 instructs the contents of the determination to the catalytic ECU 241. As a result, the catalytic ECU 241 controls the control valve 23 so that the passage ratio of the exhaust gas of the engine 1 through the catalyst is 100% and the passage ratio through the bypass passage is 0%.

As can be seen from the above, the controller 6 increases the passage ratio of the exhaust gas through the exhaust gas purification catalyst 21 when a predetermined period of time has passed after the completion of the shift from the first mode to the second mode. Thus, the possibility of the occurrence of sulfur poisoning of the exhaust gas purification catalyst 21 can be reduced. Further, after the opening degree of the EGR valve 131 is increased, the controller 6 controls the control valve 23 to increase the passage ratio of the exhaust gas through the exhaust gas purification catalyst 21. Since the exhaust gas purification catalyst 21 is used after the operation of the EGR device 13, it is possible to reduce the possibility that a large amount of methane constituent pass through the exhaust gas purification catalyst 21 and to suppress the deterioration of the catalyst.

In the example shown in FIG. 7, at time t5, the instruction mode is changed from the gas mode to the diesel mode, and the controller 6 detects the selection of the diesel mode. In accordance with this, the controller 6 stops the operation of the gas fuel supply valve 16 (OFF) and starts the operation of the main injection valve 15 (ON). In addition, since the determination of the catalyst use permission requirement is not required, the controller 6 sets the catalyst use permission requirement to OFF. Further, the controller 6 sets the opening degree of the EGR valve 131 to 0% in order to stop the operation of the EGR device 13. Further, the controller 6 immediately switches the supplied fuel from the gas fuel to the liquid fuel. Further, with respect to the flow state of the exhaust gas of the engine 1, the controller 6 determines that the passage ratio of the exhaust gas through the exhaust gas purification catalyst 21 is set to 0% and the passage ratio of the exhaust gas through the bypass passage 22 is set to 100%. Then, the controller 6 instructs the contents of the determination to the catalytic ECU 241. As a result, the catalytic ECU 241 controls the control valve 23 so that the passage ratio of the exhaust gas of the engine 1 through the catalyst is changed to 0% and the passage ratio through the bypass passage is changed to 100%.

As can be seen from the above, when the selection of the first mode is detected during the operation in the second mode, the controller 6 immediately completes the shift from the second mode to the first mode, unlike the case of switching from the first mode to the second mode. Further, when the selection of the first mode is detected during the operation in the second mode, the controller 6 immediately controls the control valve 23 to increase the passage ratio of the exhaust gas through the bypass passage 22. With such a configuration, the possibility that the sulfur constituent passes through the exhaust gas purification catalyst 21 can be reduced as much as possible, and the sulfur poisoning of the exhaust gas purification catalyst 21 can be suppressed.

### <3. Notes and the like>

Various technical features disclosed in the present specification can be changed in various ways without departing from the spirit of the technical creation thereof. In addition, the plurality of embodiments, examples, and modifications described in the present specification may be combined to the extent possible.

### <4. Supplementary Notes>

An exemplary engine system of the present invention may be an engine system comprising: an engine including a first fuel supplying portion that supplies a first fuel to a combustion chamber and a second fuel supplying portion that supplies a second fuel to the combustion chamber; an exhaust gas purification catalyst that is disposed in an exhaust passage of the engine and purifies components derived from the second fuel; a bypass passage that is connected to the exhaust passage and bypasses the exhaust gas purification catalyst; a control valve that adjusts a passage ratio of an exhaust gas of the engine through the exhaust gas purification catalyst and through the bypass passage; an EGR device that is connected to the exhaust passage on an upstream side of the control valve and recirculates a part of the exhaust gas to a supply air passage of the engine; and a controller that controls the control valve and the EGR device; wherein a first mode in which the first fuel supplying portion is operated and a second mode in which operation of the first fuel supplying portion is stopped and the second fuel supplying portion is operated are provided to be selectable, and the controller operates the EGR device when selection of the second mode is detected, and controls the control valve to increase a passage ratio of the exhaust gas through the bypass passage when selection of the first mode is detected during operation in the second mode. (first configuration).

The engine system according to the first configuration may be an engine system, wherein when selection of the second mode is detected during operation in the first mode, the controller controls the control valve to reduce a passage ratio of the exhaust gas through the bypass passage when a predetermined period of time has passed after selection of the second mode is detected (second configuration).

The engine system according to the first or second configuration may be an engine system comprising: an electric power generator that generates electric power by an output of the engine, wherein the controller controls the control valve to increase a passage ratio of the exhaust gas through the bypass passage when a setting of a load factor of the electric power generator is changed by a predetermined value or more during operation in the second mode (third configuration).

The engine system according to any one of the first to third configurations may be an engine system, wherein when it is detected that a load factor of the engine is equal to or less than a predetermined load factor during operation in the second mode, the controller controls the control valve to increase a passage ratio of the exhaust gas through the bypass passage (fourth configuration).

The engine system according to any one of the first to fourth configurations may be an engine system, comprising: at least one of a supply air pressure detecting device provided in a supply air passage of the engine and an oxygen concentration detecting device disposed in the exhaust passage, wherein the controller uses a detection value of at least one of the supply air pressure detecting device and the oxygen concentration detecting device to control the control valve (fifth configuration).

The engine system according to any one of the first to fifth configurations may be an engine system, wherein when selection of the second mode is detected during operation in the first mode, the controller starts the second mode after execution of a transition mode in which an amount of the second fuel supplied by the second fuel supplying portion is increased while an amount of the first fuel supplied by the first fuel supplying portion is decreased, and during execution of the transition mode, the controller controls the control valve to prohibit the exhaust gas from passing through the exhaust gas purification catalyst (sixth configuration).

The engine system according to the sixth configuration may be an engine system, wherein the EGR device includes an EGR valve, the controller increases an opening degree of the EGR valve after the transition mode is completed, and after an opening degree of the EGR valve is increased, the controller controls the control valve to increase the passage ratio of the exhaust gas through the exhaust gas purification catalyst (seventh configuration).

The engine system according to any one of the first to seventh configurations may be an engine system, wherein the first fuel is a liquid fuel containing a sulfur constituent, the second fuel is a gas fuel containing a methane constituent, and the exhaust gas purification catalyst is a methane oxidation catalyst (eighth configuration).

### REFERENCE SIGNS LIST

1 engine
3 electric power generator
4 exhaust passage
5 supply air passage
6 controller
13 EGR device
15 main injection valve (first fuel supplying portion)
16 gas fuel supply valve (second fuel supplying portion)
21 exhaust gas purification catalyst
22 bypass passage
23 control valve
100 engine system
131 EGR valve

## Claims

1. An engine system comprising: an engine including a first fuel supplying portion that supplies a first fuel to a combustion chamber and a second fuel supplying portion that supplies a second fuel to the combustion chamber;
an exhaust gas purification catalyst that is disposed in an exhaust passage of the engine and purifies components derived from the second fuel;
a bypass passage that is connected to the exhaust passage and bypasses the exhaust gas purification catalyst;
a control valve that adjusts a passage ratio of an exhaust gas of the engine through the exhaust gas purification catalyst and through the bypass passage;
an EGR device that is connected to the exhaust passage on an upstream side of the control valve and recirculates a part of the exhaust gas to a supply air passage of the engine; and
a controller that controls the control valve and the EGR device;
wherein a first mode in which the first fuel supplying portion is operated and a second mode in which operation of the first fuel supplying portion is stopped and the second fuel supplying portion is operated are provided to be selectable, and
the controller operates the EGR device when selection of the second mode is detected, and controls the control valve to increase the passage ratio of the exhaust gas through the bypass passage when selection of the first mode is detected during operation in the second mode.

2. The engine system according to claim 1, wherein when selection of the second mode is detected during operation in the first mode, the controller controls the control valve to reduce the passage ratio of the exhaust gas through the bypass passage when a predetermined period of time has passed after selection of the second mode is detected.

3. The engine system according to claim 1, comprising:
an electric power generator that generates electric power by an output of the engine,
wherein the controller controls the control valve to increase the passage ratio of the exhaust gas through the bypass passage when a setting of a load factor of the electric power generator is changed by a predetermined value or more during operation in the second mode.

4. The engine system according to claim 1, wherein when it is detected that a load factor of the engine is equal to or less than a predetermined load factor during operation in the second mode, the controller controls the control valve to increase the passage ratio of the exhaust gas through the bypass passage.

5. The engine system according to claim 1, comprising: at least one of a supply air pressure detecting device provided in a supply air passage of the engine and an oxygen concentration detecting device disposed in the exhaust passage,
wherein the controller uses a detection value of at least one of the supply air pressure detecting device and the oxygen concentration detecting device to control the control valve.

6. The engine system according to claim 1, wherein
when selection of the second mode is detected during operation in the first mode, the controller starts the second mode after execution of a transition mode in which an amount of the second fuel supplied by the second fuel supplying portion is increased while an amount of the first fuel supplied by the first fuel supplying portion is decreased, and
during execution of the transition mode, the controller controls the control valve to prohibit the exhaust gas from passing through the exhaust gas purification catalyst.

7. The engine system according to claim 6, wherein
the EGR device includes an EGR valve,
the controller increases an opening degree of the EGR valve after the transition mode is completed, and
after an opening degree of the EGR valve is increased, the controller controls the control valve to increase the passage ratio of the exhaust gas through the exhaust gas purification catalyst.

8. The engine system according to any one of claims 1 to 7, wherein
the first fuel is a liquid fuel containing a sulfur constituent,
the second fuel is a gas fuel containing a methane constituent, and
the exhaust gas purification catalyst is a methane oxidation catalyst.
